# EUROPEAN PATENT SPECIFICATION

(11) **EP 1 422 604 B1**
(45) Date of publication and mention of the grant of the patent: **09.01.2008**
(21) Application number: 03078377.3
(22) Date of filing: 27.10.2003
(51) Int. Cl.: G06F 3/045

(54) **Method of making a resistive touch screen**
Verfahren zur Herstellung eines berührungsempfindlichen Widerstandsbildschirms
Procédé de fabrication d'un écran tactile résistif

(30) Priority: 07.11.2002 US 289858
(43) Date of publication of application: 26.05.2004
(73) Proprietor: Eastman Kodak Company, Rochester, New York 14650 (US)
(72) Inventor: Bourdelais, Robert P., c/o Eastman Kodak Company, Rochester, New York 14650-2201 (US); Cok, Ronald S., c/o Eastman Kodak Company, Rochester, New York 14650-2201 (US); Kaminsky, Cheryl J., c/o Eastman Kodak Company, Rochester, New York 14650-2201 (US)
(74) Representative: Weber, Etienne Nicolas

(56) References cited:
- US-A- 4 220 815
- US-A- 5 220 136
- US-A1- 2002 031 622

## Description

This invention relates to a method of making resistive touch screens and more particularly, to a transparent flexible cover sheet and spacer dots separating the cover sheet from a rigid substrate in a resistive touch screen.

Resistive touch screens are widely used in conventional CRTs and in flat-panel display devices in computers and in particular with portable computers.

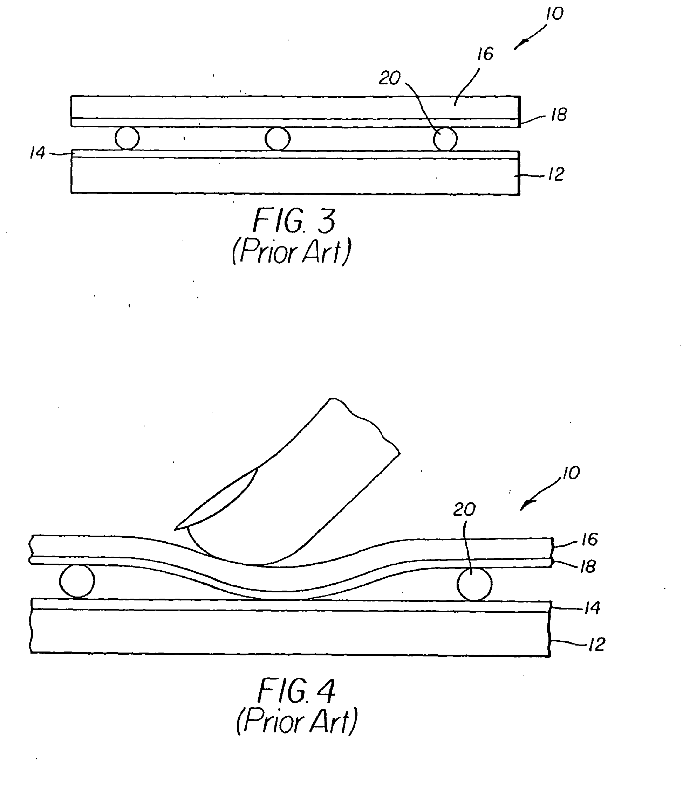

Fig. 3 shows a portion of a prior art resistive touch screen **10** of the type shown in Published US Patent Application No. 2002/0094660A1, filed by Getz et al., September 17, 2001, and published July 18, 2002, which includes a rigid transparent substrate **12**, having a first conductive layer **14**. A flexible transparent cover sheet **16** includes a second conductive layer **18** that is physically separated from the first conductive layer **14** by spacer dots **20** formed on the second conductive layer **18** by screen printing.

Referring to Fig. 4, when the flexible transparent cover sheet **16** is deformed, for example by finger pressure, to cause the first and second conductive layers to come into electrical contact, a voltage applied across the conductive layers **14** and **18** results in a flow of current proportional to the location of the contact. The conductive layers **14** and **18** have a resistance selected to optimize power usage and position sensing accuracy. The magnitude of this current is measured through connectors (not shown) connected to metal conductive patterns (not shown) formed on the edges of conductive layers **18** and **14** to locate the position of the deforming object.

Alternatively, it is known to form the spacer dots **20** for example by spraying through a mask or pneumatically sputtering small diameter transparent glass or polymer particles, as described in US 5,062,198 issued to Sun, November 5, 1991. The transparent glass or polymer particles are typically 45 microns in diameter or less and mixed with a transparent polymer adhesive in a volatile solvent before application. This process is relatively complex and expensive and the use of an additional material such as an adhesive can be expected to diminish the clarity of the touch screen. Such prior art spacer dots are limited in materials selections to polymers that can be manufactured into small beads or UV coated from monomers. It is also known to use photolithography to form the spacer dots **20**.

In these prior art methods, the spacer dots may come loose and move around within the device, thereby causing unintended or inconsistent actuations. Furthermore, contact between the conductive layers **14** and **18** is not possible where the spacer dots are located, thereby reducing the accuracy of the touch screen, and stress at the locations of the spacer dots can cause device failure after a number of actuations. Unless steps are taken to adjust the index of refraction of the spacer dots, they can also be visible to a user, thereby reducing the quality of a display located behind the touch screen.

US-A-4 220 815 discloses a nonplanar transparent electrophotographic sensor comprising a cover sheet coated with a conductive layer, and teaches the use of a punch applied to the cover sheet on the side of the cover sheet opposite to the conductive layer to form insulating islands projecting through the conductive layer along with corresponding dimples or apertures formed in or through the cover sheet.

There is a need therefore for an improved means to separate the conductive layers of a touch screen and a method of making the same that improves the robustness of the touch screen and reduces the cost of manufacture.

The need is met by providing a method of making a resistive touch screen according to claim 1.

The method of making the touch screen of the present invention has the advantages that it is simple to manufacture, and provides greater accuracy, robustness and clarity.
Fig. 1 is a schematic diagram showing a portion of a touch screen made according to the present invention;
Fig. 2 is a schematic diagram illustrating the operation of the touch screen shown in Fig. 1;
Fig. 3 is a schematic diagram showing a portion of a prior art touch screen;
Fig. 4 is a schematic diagram illustrating the operation of the touch screen of Fig. 3;
Fig. 5 is a side-view of a resistive touch screen made according to the present invention integrated with a bottom emitting flat-panel display;
Fig. 6 is a side-view of a resistive touch screen made according to the present invention integrated with a top emitting flat-panel;
Fig. 7 is a diagram illustrating the compression of one of the spacer dots according to the present invention; and
Fig. 8 is a schematic diagram illustrating one method of making a touch screen according to the present invention.

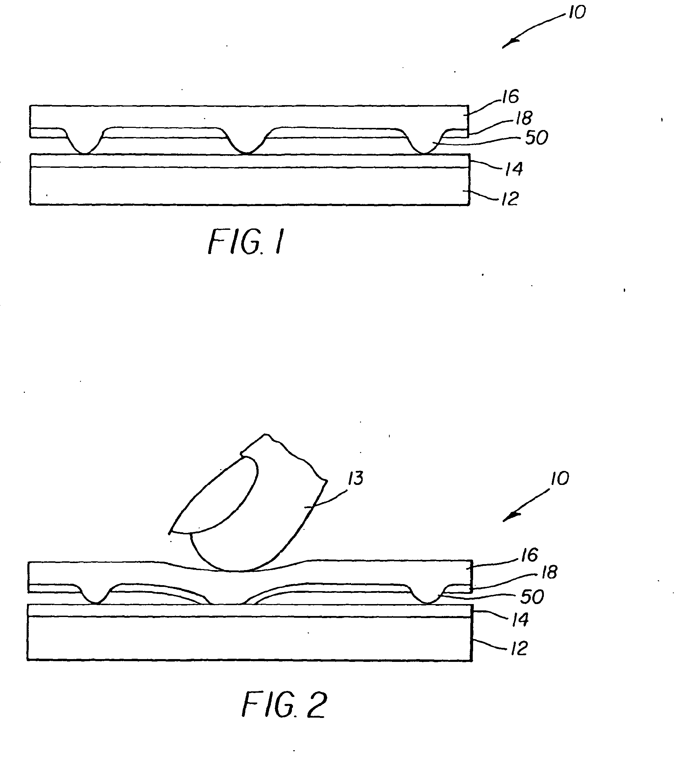

Referring to Fig 1, the problems of the prior art resistive touch screens are overcome through the use of a flexible transparent cover sheet **16** having a second conductive layer **18** and integral compressible spacer dots **50** formed in the flexible transparent cover sheet **16**. The second conductive layer **18** of the flexible transparent cover sheet **16** does not cover the peaks of the integral compressible spacer dots **50**. The word "integral" means that the compressible spacer dots **50** are formed in and comprise the same material as the flexible transparent cover sheet **16** for example by molding or embossing.

Referring to Fig. 2, in operation, the integral compressible spacer dots **50** prevent the second conductive layer **18** deposited on the flexible transparent cover sheet **16** from touching the first conductive layer **14** on the transparent substrate **12**. Because the peaks of the integral compressible spacer dots **50** are not coated with the second conductive layer **18** and physically separate the layers **18** and **14**, no current can flow between the conductive layers.

When an external object such as a finger **13** or stylus deforms the flexible transparent cover sheet **16**, the flexible transparent cover sheet **16** is pressed against the substrate **12** thereby causing the conductive layers **14** and **18** to touch and close a circuit. If the deformation occurs on one of the integral compressible spacer dots **50**, the spacer dot is compressed so that contact is made between conductive layers **14** and **18** and current can flow between the conductive layers. Since the stylus or finger **13** is typically larger than the integral compressible spacer dot **50**, the lack of conductive material **18** at the top of the integral compressible spacer dot **50** does not inhibit the conductive layers **14** and **18** from touching.

Because the integral compressible spacer dots **50** are an integral part of the flexible transparent cover sheet **16**, they are fixed in position and cannot move or come loose as can spacer dots composed of beads in an adhesive matrix, or dots that are formed by printing or photolithography. Moreover, the integral spacer dots can be smaller than conventional spacer dots (e.g. as small as 1 micron in diameter, usually 10 to 50 microns). Additional materials, such as adhesives, are unnecessary, thereby reducing manufacturing materials and steps and further improving the optical clarity of the device.

There are at least two methods for creating the integral compressible spacer dots integral to the flexible transparent cover sheet. The first is to take an existing, formed flexible transparent cover sheet with no spacer dots and emboss spacer dots in the flexible transparent cover sheet by applying heat and pressure to the flexible transparent cover sheet in a mold that defines a reverse image of the spacer dots. The heat and pressure reforms the flexible transparent cover sheet so that the flexible transparent cover sheet will have integral compressible spacer dots when the mold is removed. Such a mold can be, for example, a cylinder that rolls over a continuous sheet of flexible transparent cover sheet material.

In a second method melted polymer may be coated over the mold and forced into the cavities (for example by injection roll molding), allowed to cool, and then lifted from the mold. The mold may be provided with the cavities through conventional means, for example machining, bead blasting or etching. The base of the dot **50** (where it is connected to the sheet **16**) may be the maximum size of the spacer dot to facilitate the extraction of the shaped material from the mold. The molding process may be continuous roll molding.

With either method, a great variety of spacer dot shapes are possible, for example, cylinders, cubes, hemispheres, and pyramids. The spacer dot shape is dependent on a number of considerations, for example, the method used for manufacturing, the size of the object used to deform the cover sheet, the size of the dots, the flexible transparent cover sheet material, and the number of activations of the device over its useable lifetime.

In one embodiment of the invention, the integral compressible spacer dots of the invention have a flat-topped circularly cylindrical shape. A circular cylinder provides for specular light transmission and has impact resistance. Further, the ends of the cylinders can provide excellent optical contact with the substrate. The diameter and height of the cylinders can be adjusted to provide the desired compression profile. As used herein compression profile means the ability of the spacer dots to undergo the desired compression and expansion.

In another example, the integral compressible spacer dots are hemispheres. The hemisphere provides a precision gap as well as high light transmission. The hemisphere also provides excellent compression and fatigue characteristics. In another, example, the integral compressible spacer dots are cylinders having rectangular cross sections. A rectangular compressible spacer dot (for example a cube) provides impact resistance as well as a precision optical spacing. In another example, the integral compressible spacer dot comprises a pyramid, which may have a flat top. A pyramid provides a precision optical gap as well as some light directing. A 45-degree pyramid in air will tend to focus transmitted light into a line perpendicular to the base of the pyramid providing both optical spacing as well as light directing. Further, the pyramid and hemisphere shapes provide a more rapidly changing compression gradient as the shape is compressed.

The flexible transparent cover sheet having the integral compressible spacer dots is preferably constructed from a polymer. A transparent polymeric material may provide high light transmission properties, is inexpensive and a sheet of polymeric material can easily be formed with integral compressible spacer dots. Suitable polymer materials include polyolefins, polyesters, polyamides, polycarbonates, cellulosic esters, polystyrene, polyvinyl resins, polysulfonamides, polyethers, polyimides, polyvinylidene fluoride, polyurethanes, polyphenylenesulfides, polytetrafluoroethylene, polyacetals, polysulfonates, polyester ionomers, and polyolefin ionomers. Polycarbonate polymers have high light transmission and strength properties. Copolymers and/or mixtures of these polymers can be used.

Polyolefins particularly polypropylene, polyethylene, polymethylpentene, and mixtures thereof are suitable. Polyolefin copolymers, including copolymers of propylene and ethylene such as hexene, butene and octene can also be used. Polyolefin polymers are suitable because they are low in cost and have good strength and surface properties and have been shown to be soft and scratch resistant.

The polymeric materials used to make the flexible transparent cover sheet of this invention preferably have a light transmission greater than 92%. A polymeric material having an elastic modulus greater than 500 MPa is suitable. An elastic modulus greater than 500 MPa allows for the integral compressible spacer dots to withstand the compressive forces common to touch screens. Further, an elastic modulus greater than 500 MPa allows for efficient assembly of a touch screen as the dots are tough and scratch resistant.

A spacer dot integral to the flexible cover sheet significantly reduces unwanted reflection from an optical surface such as those present in prior art touch screens that utilize polymer beads. An integral spacer dot also provides for superior durability as the dot location is fixed in the flexible cover sheet of the invention and is not subject to movement during vibration or extended use. The integral compressible spacer dots of the invention preferably have a height between 10 and 50 micrometers. A height less than 10 micrometers may not provide sufficient spacing for the two conductive layers resulting in false actuation. A height greater than 50 micrometers separating the layers may require too high a compression force to connect the two conductive layers and thus is problematic.

The integral compressible spacer dots preferably are spaced apart by a distance of greater than 1 millimeter. Spacing less than 0.7 millimeters may require compressive forces that are too high to achieve contact between the two conductive layers. The polymer and dot profile used for the flexible transparent cover sheet with integral compressible spacer dots according to this invention preferably provide for elastic deformation of greater than 1 million actuations. Elastic deformation is the mechanical property of the spacer dot to recover 95% of its original height after an actuation. High-quality touch screens are also required to have a consistent actuation force over the useful lifetime of the device. Spacer dot fatigue can result in increasing actuation forces over the lifetime of the device, resulting in scratching of the surface of the touch screen and user frustration.

To further improve the utility and performance of the flexible transparent cover sheet with integral compressible spacer dots, the addition of layered inorganic particulates can be added to the polymeric material. The addition of layered organic particulates can provide a significant improvement in the elastic deformation of the polymer spacer dots. Further, the addition of inorganic layered particulates can be used to increase the Tg of the polymer spacer dots allowing for a wider performance range with respect to temperature. To obtain the elastic deformation and Tg improvements, the polymer may be provided with between 1 and 5% weight addition of an inorganic layered particle having an aspect ratio of at least 10 to 1, a lateral dimension of between 0.01 µm and 5 µm, and a vertical dimension between 0.5 nm and 10 nm.

The layered particle materials suitable for this invention can comprise any inorganic layered materials in the shape of plates with significantly high aspect ratio. As used herein, "plate" means a three dimensional shape having two dimensions of the same size scale and a third dimension having a substantially smaller scale. For example, the length and width of a plate are of comparable size but orders of magnitude greater than the thickness of the plate.

However, other shapes with high aspect ratio will also be advantageous, as per the invention. The layered materials suitable for this invention include phyllosilicates, e.g., montmorillonite, particularly sodium montmorillonite, magnesium montmorillonite, and/or calcium montmorillonite, nontronite, beidellite, volkonskoite, hectorite, saponite, sauconite, sobockite, stevensite, svinfordite, vermiculite, magadiite, kenyaite, talc, mica, kaolinite, and mixtures thereof. Other useful layered materials include illite, mixed layered illite/smectite minerals, such as ledikite and admixtures of illites with the clay minerals named above. Other useful layered materials, particularly useful with anionic polymers, are the layered double hydroxides or hydrotalcites, such as Mg₆Al_{3.4}(OH)_{18.8}(CO₃)_{1.7}H₂O, which have positively charged layers and exchangeable anions in the interlayer spaces. Other layered materials having little or no charge on the layers may be useful provided they can be intercalated with swelling agents, which expand their interlayer spacing. Such materials include chlorides such as FeCl₃, FeOCl, chalcogenides, such as TiS₂, MoS₂, and MoS₃, cyanides such as Ni(CN)₂ and oxides such as H₂Si₂O₅, V₆O₁₃, HTiNbO₅, Cr_{0.5}V_{0.5}S₂, V₂O₅, Ag doped V₂Oₛ, W_{0.2}V_{2.8}O₇, Cr₃O₈, MoO₃(OH)₂, VOPO₄-2H₂O, CaPO₄CH₃-H₂O, MnHAsO₄-H₂O, Ag₆Mo₁₀O₃₃ and the like.

Suitable layered materials are swellable so that other agents, usually organic ions or molecules, can intercalate and/or exfoliate the layered material resulting in a desirable dispersion of the inorganic phase. These swellable layered materials include phyllosilicates of the 2:1 type, as defined in clay literature (see, for example, the textbook: "An introduction to clay colloid chemistry," by H. van Olphen, John Wiley & Sons Publishers). Typical phyllosilicates with ion exchange capacity of 50 to 300 milliequivalents per 100 grams are suitable. Suitable layered materials for the present invention include smectite clay such as montmorillonite, nontronite, beidellite, volkonskoite, hectorite, saponite, sauconite, sobockite, stevensite, svinfordite, halloysite, magadiite, kenyaite and vermiculite as well as layered double hydroxides or hydrotalcites. Suitable smectite clays include montmorillonite, hectorite and hydrotalcites, because of commercial availability of these materials.

The aforementioned smectite clay can be natural or synthetic. This distinction can influence the particle size and/or the level of associated impurities. Typically, synthetic clays are smaller in lateral dimension, and therefore possess smaller aspect ratio. However, synthetic clays are purer and are of narrower size distribution, compared to natural clays and may not require any further purification or separation. For this invention, the smectite clay particles should have a lateral dimension of between 0.01 µm and 5 µm, and preferably between 0.05 µm and 2 µm, and more preferably between 0.1 µm and 1 µm. The thickness or the vertical dimension of the clay particles can vary between 0.5 nm and 10 nm, and preferably between 1 nm and 5 nm. The aspect ratio, which is the ratio of the largest and smallest dimension of the clay particles should be between 10:1 and 1000:1 for this invention. The aforementioned limits regarding the size and shape of the particles are to ensure adequate improvements in some properties of the nanocomposites without deleteriously affecting others.

"Nanocomposite" shall mean a composite material wherein at least one component comprises an inorganic phase, such as a smectite clay, with at least one dimension in the 0.1 to 100 nanometer range. For example, a large lateral dimension may result in an increase in the aspect ratio, a desirable criterion for improvement in mechanical and barrier properties. However, very large particles can cause optical defects due to deleterious light scattering, and can be abrasive to processing, conveyance and finishing equipment as well as to other components.

The concentration of smectite clay in the polymer material can vary as per need; however, it is preferred to be ≤ 10 % by weight of the binder. Significantly higher amounts of clay can impair physical properties of the optical component by rendering it brittle, as well as difficult to process. On the other hand, too low a concentration of clay may fail to achieve the desired optical effect. The clay concentration may be maintained between 1 and 10% and preferably be between 1.5 and 5% for optimum results.

The smectite clay materials, generally require treatment by one or more intercalants to provide the required interlayer swelling and/or compatibility with the matrix polymer. The resulting interlayer spacing is critical to the performance of the intercalated layered material in the practice of this invention. As used herein the "inter-layer spacing" refers to the distance between the faces of the layers as they are assembled in the intercalated material before any delamination (or exfoliation) takes place. The clay materials generally include interlayer or exchangeable cations such as Na +, Ca+2, K +, Mg+2 and the like. In this state, these materials do not delaminate in host polymer melts regardless of mixing, because their interlayer spacings are usually very small (typically equal to or less than about 0.4 nm) and consequently the interlayer cohesive energy is relatively strong. Moreover, the metal cations do not aid compatibility between layers and the polymer melt.

In the present invention, the smectite clays are preferably intercalated by swelling agent(s) or intercalant(s), to increase interlayer distances to the desired extent. In general, the interlayer distance should be at least about 0.5 nm, preferably at least 2 nm, as determined by X-ray diffraction. The clay to swelling agent or intercalant weight ratio may vary from 0.1:99.9 and 99.9:01, but preferably between 1:99 and 90:10 and more preferably between 20:80 and 80:20.

"Intercalant" shall mean the aforesaid foreign molecule inserted between platelets of the aforesaid layered material. "Exfoliation" or "delamination" shall mean separation of individual platelets in to a disordered structure without any stacking order. "Intercalated " shall refer to layered material that has at least partially undergone intercalation and/or exfoliation. "Organoclay" shall mean clay material modified by organic molecules.

The swelling agent or intercalant can be an organic material preferably comprising a hydrophilic component, and more preferably also comprising an oleophilic component. It is believed that the hydrophilic component participates in intercalation and the oleophilic component participates in compatibilization of the smectite clay in a suitable matrix or binder polymer. The aforesaid organic material can comprise a surfactant, a block co-polymer and/or an ethoxylated alcohol. In one embodiment, the aforesaid organic material is a block copolymer or an ethoxylated alcohol, similar to those disclosed in US 4,739,007; 4,810,734; 4,894,411; 5,102,948; 5,164,440; 5,164,460; 5,248,720; 5,854,326; and 6,034,163. "Layered material" shall mean an inorganic material such as a smectite clay that is in the form of a plurality of adjacent bound layers. "Platelets" shall mean individual layers of the layered material. "Intercalation" shall mean the insertion of one or more foreign molecules or parts of foreign molecules between platelets of the layered material, usually detected by X-ray diffraction technique, as illustrated in US 5,891,611 (line 10, col. 5 - line 23, col. 7).

The block copolymers are amphiphilic and have a hydrophilic and an oleophilic component. Further, the block copolymers can be of the two block or "A-B" type where A represents the hydrophilic component and B represents the oleophilic component or of the three block or "A-B-A" type. For example, the block copolymer may comprise three blocks and the matrix may comprise a copolymer or a blend of polymers compatible with at least one block of the copolymer. Also, where the matrix is a blend of polymers, individual polymers in the blend may be compatible with separate blocks of the copolymers. One class of polymeric components that is useful for the hydrophilic component is poly(alkylene oxides) such as poly(ethylene oxide). The term poly(alkylene oxides) as used herein includes polymers derived from alkylene oxides such as poly(ethylene oxides) including mixtures of ethylene and propylene oxides. The most suitable is poly(ethylene oxide), because of its effectiveness in the present invention, its well-known ability to intercalate clay lattices through hydrogen bonding and ionic interactions, as well as its thermal processability and lubricity. The term poly(alkylene oxides) as used herein includes polymers derived from alkylene oxides such as poly(ethylene oxides) including mixtures of ethylene and propylene oxides. The most suitable is poly(ethylene oxide), mainly because of its effectiveness, its commercial availability in a range of molecular weights and chemistries affording a wide latitude in the synthesis of the block copolymers.

Poly(ethylene oxides) are well known in the art and are described in, for example US 3,312,753 at col. 4. Useful (alkylene oxide) block contains a series of interconnected ethyleneoxy units and can be represented by the formula:

[CH2-CH2-O]n

wherein the oxy group of one unit is connected to an ethylene group of an adjacent ethylene oxide group of an adjacent ethyleneoxy unit of the series.

Other useful hydrophilic components include poly 6, (2-ethyloxazolines), poly(ethyleneimine), poly(vinylpyrrolidone), poly(vinyl alcohol), polyacrylamides, polyacrylonitrile, polysaccharides and dextrans.

The oleophilic component of the block of the polymers useful in the present invention can also be selected from many common components. The oleophilic component is characterized in that it is at least partially miscible in the binder polymer, and/or interacts with the binder polymer, for example, through transesterfication. In the case of a polyester binder, the oleophilic block comprises polyester. Exemplary oleophilic components can be derived from monomers in such as: caprolactone; propiolactone; β-butyrolactone; δ-valerolactone; ε-caprolactam; lactic acid; glycolic acid; hydroxybutyric acid; derivatives of lysine; and derivatives of glutamic acid.

Other useful oleophilic components can be derived from α, β-ethylenically unsaturated monomers, such as olefins, styrenics and acrylates. Polymeric forms would include polycaprolactone; polypropiolactone; poly β-butyrolactone; poly δ-valerolactone; poly ε-caprolactam; polylactic acid; polyglycolic acid; polyhydroxybutyric acid; derivatives of polylysine; and derivatives of polyglutamic acid, polyolefins, polystyrene, polyacrylates, and polymers of α, β- ethylenically unsaturated monomers, such as olefins, styrenics and acrylates. Suitable components comprise polyester, polycaprolactone, polyamide, and polystyrene, because of their effectiveness in the present invention and compatibility with a wide rage of engineering thermoplastics.

The molecular weights of the hydrophilic component and the oleophilic component are not critical. A useful range for the molecular weight of the hydrophilic component is between about 300 and 50,000 and preferably 1,000 and 25,000. The molecular weight of the oleophilic component is between about 1,000 and 100,000 and preferably between 2,000 and 50,000. A matrix compatible block comprises 50 to 500 monomer repeat units of caprolactone with a matrix polymer of polyester. Another matrix compatible block comprises 25 to 100 monomer repeat units of ethylene with a matrix polymer of polyethylene. The molecular weight ranges are chosen to ensure ease of synthesis and processing under a variety of conditions.

Ethoxylated alcohols are a class of nonionic surfactants derived from very long chain, linear, synthetic alcohols. These alcohols are produced as functional derivatives of low molecular weight ethylene homopolymers. These when reacted with ethylene oxide or propylene oxide yield condensation products known as oxylated alcohols. The average chain length of the hydrocarbon portion can be between 12 and 106 carbons but is not restricted to this. It is preferably in the 26 - 50 carbon range.

The relative efficiency of the hydrophilic and oleophilic portion of the ethoxylated alcohol molecule is controlled by changing the starting alcohol, changing the amount of ethylene oxide, or using propylene oxide. The ethylene oxide or propylene oxide content can range from 1 to 99% by weight, preferably 10-90% by weight. Thus the surfactant chemistry can be widely tailored for use in a wide range of applications. Typically they have been used as dispersion aids for pigments in paints, coatings and inks. They have been used as mold release components for plastics, nonionic emulsifiers, emulsifiers/lubricants for textile processing and finishing. The present invention finds that oxylated alcohols, especially ethoxylated alcohols, may be used for intercalation of smectite clays. These intercalated clays are easily dispersed in commercial polyolefin polymers and the degree of intercalation produced by the ethoxylated alcohols was not found to be reduced after dispersion.

The smectite clay and the intercalant, preferably the block copolymer and/or the ethoxylated alcohol, can be interacted for intercalation by any suitable means known in the art of making nanocomposites. For example, the clay can be dispersed in suitable monomers or oligomers, which are subsequently polymerized. Alternatively, the clay can be melt blended with the block copolymer, oligomer or mixtures thereof at temperatures preferably comparable to their melting point or above, and sheared. In another method, the clay and the block copolymer can be combined in a solvent phase to achieve intercalation, followed by solvent removal through drying.

The size, shape, and locations of the integral compressible spacer dots **50** may be optimized for specific applications. The locations may form a regular pattern or an irregular random pattern. For example, the profile of the embossing can vary to complement a variety of flexible transparent cover sheet materials so as to maximize the lifetime, clarity, and physical properties of the flexible transparent cover sheet.

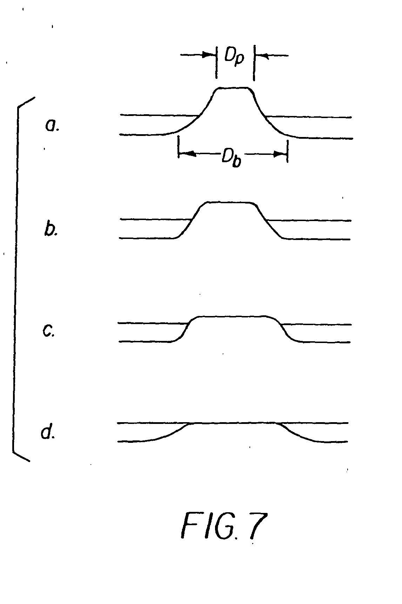

The height and spacing of injection roll molded compressible spacer dots can be chosen to meet the pressure and reliability usage specification of a particular application. Referring to Fig. 7, the profile of a truncated conical spacer dot that has a base diameter D_{b} that is 75% larger than the peak diameter Dₚ. This geometry has been shown to provide an excellent compression profile allowing moderate levels of compressive force applied by the user to activate the touch screen. The base diameter being 75% larger than the peak diameter provides mechanical toughness, reduces dot wear and provides for over 1 million actuations before a 5% loss in height. A suitable material for the compressive dot illustrated in Fig. 7 is a blend of polyester and polycarbonate where the polycarbonate is present in the amount of 10% by weight of the polyester.

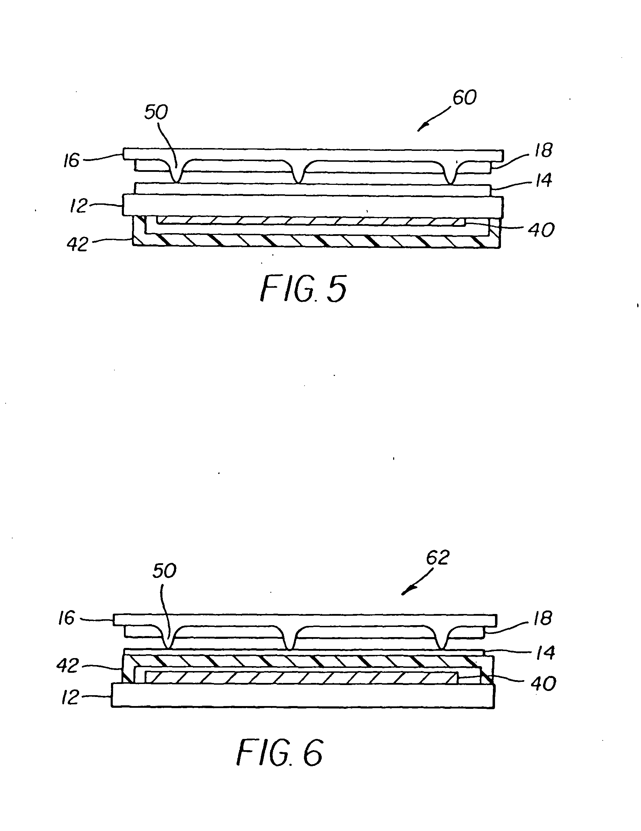

Referring to Figs. 5 and 6, the touch screen made according to the present invention can be integrated into a flat-panel display by using either the cover or the substrate of the flat-panel display as the transparent substrate **12** of the touch screen. The flat-panel display may emit light through a transparent cover or through a transparent substrate. As shown in Fig 5, a flat-panel OLED display with an integrated touch screen **60** includes a substrate **12,** OLED materials **40** and encapsulating cover **42** for the OLED display. On the opposite side of the substrate **12**, the touch screen includes the first conductive layer **14** and the flexible transparent cover sheet **16** having a second conductive layer **18** and integral compressible spacer dots **50.**

As shown in Fig 6, an OLED display with an integrated touch screen **62** includes a substrate **12,** OLED materials **40**, and an encapsulating cover **42** for the OLED display. On the opposite side of the encapsulating cover **42**, the touch screen includes the first conductive layer **14** and the flexible transparent cover sheet **16** having a second conductive layer **18** and integral compressible spacer dots **50.**

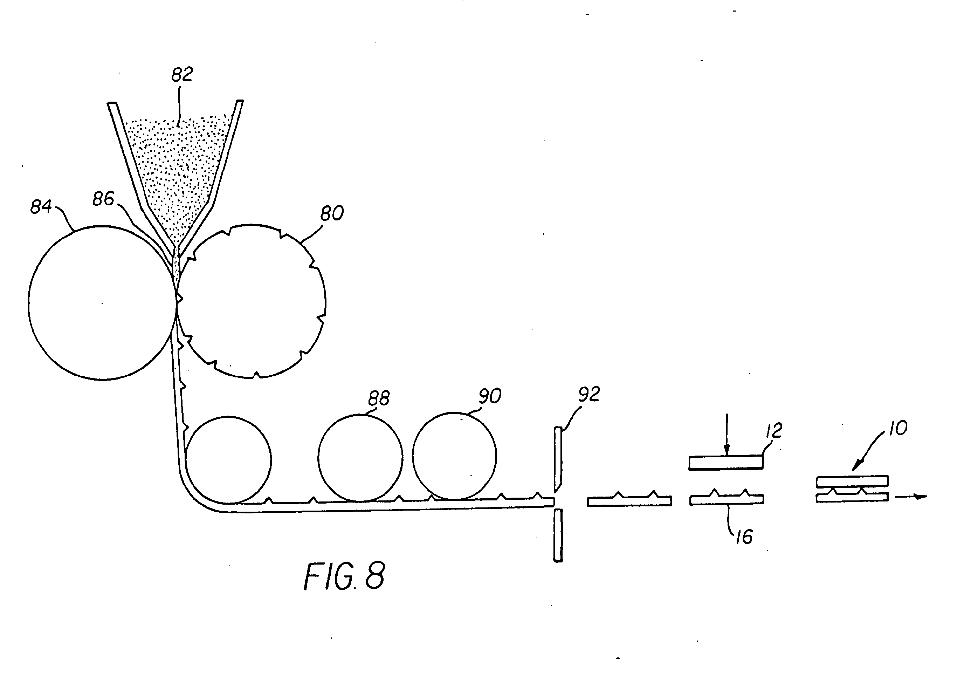

Referring to Fig. 8, in a preferred embodiment of the present invention, the integral spacer dots and flexible cover sheet are injection roll molded as a single unit. In the injection roll molding process a polymer **82** is heated above its melting point, and is injected under pressure into a nip **86** formed by a patterned roller **80** and an elastomer covered backing roller **84** in direct contact with the patterned roller **80**. The patterned roller 80 has a pattern of cavities for forming the integral spacer dots. As the polymer is injected into the nip **86**, some of the melted polymer fills the cavities of the patterned roller to form the integral spacer dots and the balance of the polymer is squeezed into a flat sheet having the integral spacer dots. After the integral spacer dots and flexible cover sheet have been formed, the flexible cover sheet with integral spacer dots is mechanically released from both of the rollers.

Next, the peaks of the spacer dots are preferably treated **88** with a high energy treatment such as CDT (corona discharge treatment) or GDT (glow discharge treatment) to provide a surface energy difference between the peaks of the spacer dots and the space between the spacer dots allowing for differential conductive solution wetting between the peaks of the spacer dots and the space between the spacer dots. The peaks are treated by CDT or GDT by directing the high energy perpendicular to the surface of the peaks as is typical with CDT or GDT surface treatment. Further, the CDT or GDT treatment may be directed at the spacer dots at an angle greater than 15 degrees from the perpendicular case which also allows for differential energy treatment of the spacer dots. A transparent conductive coating such as polythiophine, ITO, polyaniline, polypyrrole, doped polymers is applied 90 to the flexible cover sheet and the conductive coating flows off of the peaks of the dots and into the spaces between the dots, leaving the peaks of the spacer dots free of conductive coating. The coating is then dried or cured to form the transparent conductive coating. Suitable coating methods including curtain coating, roll coating and spin coating, slide coating, ink jet printing, patterned gravure coating, blade coating, electrophotographic coating and centrifugal coating may be used to apply the transparent conductive coating. The transparent conductive coating may have a resistivity of between 300 and 600 ohms/square. A low viscosity conductive material may be efficiently flowed into the spaces between the spacer dots, leaving the peaks exposed. The conductive material viscosity is preferably less than 4 mPa.sec. Additionally, corona discharge surface treatment may be employed to improve the coating between the dots. Finally, the web of transparent flexible cover sheet material with integral spacer dots is cut **92** into individual cover sheets 16 and applied to a rigid substrate **12** of a touch screen **10**.

Applicants have demonstrated the present invention through the construction of a 100 micrometer thick polycarbonate transparent flexible cover sheet having integral polycarbonate hemispherical 20 micrometer diameter spacer dots using injection roll molding to form a 20 cm by 20 cm sheet. The cover sheet containing the 20 micrometer spacer dots was coated with a conductive polymer having a surface resistivity of 375 ohms/square using a gravure coating process with a scraping blade contacting the spacer dots to yield a continuous conductive coating in the area not occupied by the integral spacer dots.

The number of features in the roller per area is determined by the spacer dot size and the pattern depth. Larger diameters and deeper patterns require fewer numbers of features in a given area. Therefore the number of features is inherently determined by the spacer dot size and the pattern depth. The spacer dots of the invention may also be manufactured by vacuum forming around a pattern, injection molding the dots and embossing dots in a polymer web. While these manufacturing techniques do yield acceptable dots, injection roll molding polymer onto a patterned roller allows for the flexible cover sheet with spacer dots of the invention to be formed into rolls thereby lowering the manufacturing cost.

Injection roll molding has been shown to more efficiently replicate the desired complex dot geometry compared to embossing and vacuum forming. It is further contemplated that the flexible cover sheet is cut into the desired size for application to an LCD or OLED flat-panel display, for example.

The touch screen made according to the present invention may be used in conjunction with any flat panel display, including but not limited to OLED and liquid crystal display devices.

## Claims

1. A method of making a resistive touch screen (10), comprising the steps of:
a) providing a transparent substrate (12);
b) forming a first conductive layer (14) on the transparent substrate;
c) providing a flexible transparent cover sheet (16);
d) molding compressible spacer dots (50) on a first side of the flexible transparent cover sheet;
e) forming a second conductive layer (18) on the first side of the molded flexible transparent cover sheet, where the peaks of the integral compressible spacer dots molded on the first side extend through the second conductive layer; and
f) locating the flexible transparent cover sheet over the transparent substrate such that the integral compressible spacer dots physically separate the second conductive layer from the first conductive layer, and when a force is applied to the flexible transparent cover sheet by an external object (13) at the location of one of the compressible spacer dots, the compressible spacer dot is compressed to allow electrical contact between the first and second conductive layers.

2. The method claimed in claim 1, wherein the flexible transparent cover sheet is provided as a web in a continuous roll, molding said spacer dots in the roll form and cut from the roll to form a sheet.

3. The method claimed in claim 1, wherein the spacer dots are applied to the flexible transparent cover sheet by injection roll molding.

4. The method claimed in claim 1, wherein the spacer dots are formed in the flexible transparent cover sheet by applying heat and pressure to the flexible transparent cover sheet by a mold including a reverse image of the spacer dots.

## Patentansprüche

1. Verfahren zur Herstellung eines resistiven berührungsempfindlichen Bildschirms (10) mit folgenden Schritten:
a) Bereitstellen eines transparenten Substrats (12);
b) Ausbilden einer ersten leitfähigen Schicht (14) auf dem transparenten Substrat;
c) Bereitstellen einer flexiblen, transparenten Deckfolie (16);
d) Ausformen zusammendrückbarer Abstandshalter (50) auf einer ersten Seite der flexiblen, transparenten Deckfolie;
e) Ausbilden einer zweiten leitfähigen Schicht (18) auf der ersten Seite der ausgeformten flexiblen, transparenten Deckfolie, wobei die Spitzen der einstückig ausgebildeten, zusammendrückbaren Abstandshalter, die auf der ersten Seite ausgeformt sind, sich durch die zweite leitfähige Schicht erstrecken; und
f) Anordnen der flexiblen, transparenten Deckfolie über dem transparenten Substrat derart, dass die einstückig ausgebildeten, zusammendrückbaren Abstandshalter die zweite leitfähige Schicht physikalisch von der ersten leitfähigen Schicht trennen, und dass, wenn mittels eines externen Gegenstandes (13) am Ort eines der zusammendrückbaren Abstandshalter eine Kraft auf die flexible, transparente Deckfolie aufgebracht wird, der zusammendrückbare Abstandshalter derart zusammengedrückt wird, dass ein elektrischer Kontakt zwischen der ersten und der zweiten leitfähigen Schicht entsteht.

2. Verfahren nach Anspruch 1, worin die flexible, transparente Deckfolie als Band mittels einer Endloswalze erzeugt wird, wobei die Abstandshalter in der Walzenform ausgeformt werden, und worin die Deckfolie von der Walze abgeschnitten wird, um eine Folie zu bilden.

3. Verfahren nach Anspruch 1, worin die Abstandshalter auf die flexible, transparente Deckfolie durch ein Walzenspritzgussverfahren aufgebracht werden.

4. Verfahren nach Anspruch 1, worin die Abstandshalter in der flexiblen, transparenten Deckfolie durch Aufbringen von Wärme und Druck auf die flexible, transparente Deckfolie mittels einer Gussform ausgeformt werden, die ein umgekehrtes Abbild der Abstandshalter aufweist.

## Revendications

1. Procédé pour préparer un écran tactile résistif (10) comprenant les étapes de
a) préparation d'un substrat transparent (12) ;
b) formation d'une première couche conductrice (14) sur le substrat transparent ;
c) préparation d'une feuille protectrice transparente souple (16);
d) moulage des points d'espacement compressibles (50) sur une première face de la feuille protectrice transparente souple ;
e) formation d'une deuxième couche conductrice (18) sur la première face de la feuille protectrice transparente souple et moulée, dans laquelle les pics des points d'espacement compressibles intégrés moulés sur la première face s'étendent dans la deuxième couche conductrice ; et
f) mise en place de la feuille protectrice transparente souple sur le substrat transparent de telle sorte que les points d'espacement compressibles intégrés séparent physiquement la deuxième couche conductrice de la première couche conductrice, et que lorsqu'une force est appliquée sur la feuille protectrice transparente souple par un objet externe (13) au niveau de l'un des points d'espacement compressibles, le point d'espacement compressible soit comprimé pour permettre un contact électrique entre la première et la deuxième couches conductrices.

2. Procédé selon la revendication 1, dans lequel la feuille protectrice transparente souple est préparée sous forme d'une bande en rouleau continu, en moulant lesdits points d'espacement dans le rouleau, puis découpée dans le rouleau pour former une feuille.

3. Procédé selon la revendication 1, dans lequel les points d'espacement sont appliqués sur la feuille protectrice transparente souple par moulage du rouleau par injection.

4. Procédé selon la revendication 1, dans lequel les points d'espacement sont formés dans la feuille protectrice transparente souple par l'application de chaleur et de pression à la feuille protectrice transparente souple à l'aide d'un moule contenant une image inversée des points d'espacement.
